# EUROPEAN PATENT APPLICATION

(11) **EP 3 836 594 A1**
(43) Date of publication of application: **16.06.2021**
(21) Application number: 19853619.5
(22) Date of filing: 22.08.2019
(51) Int. Cl.: H04W 24/02

(54) **UI DISPLAY METHOD AND APPARATUS, AND TERMINAL DEVICE AND STORAGE MEDIUM**

(30) Priority: 27.08.2018 CN 201810983045
(71) Applicant: GUANGDONG OPPO MOBILE TELECOMMUNICATIONS CORP., LTD., Dongguan Guangdong 523860 (CN)
(72) Inventor: XIA, Yang, Dongguan, Guangdong 523860 (CN); ZHANG, Tao, Dongguan, Guangdong 523860 (CN)
(74) Representative: Manitz Finsterwald Patent- und Rechtsanwaltspartnerschaft mbB
(86) International application number: PCT/CN2019/102082
(87) International publication number: WO 2020/043009

(57) **Abstract**

Provided is a user interface display method, wherein a terminal device can determine and display a radio access network type of a current service. The method comprises: a terminal device determining, according to an available downlink spectrum resource allocated by a first network, a radio access network (RAN) type for downlink transmission; and the terminal device displaying the RAN type on a user interface. Further provided are a user interface display apparatus and a terminal device.

## Description

### CROSS REFERENCE TO RELATED APPLICATIONS

The present application is based on the Chinese Patent Application No. 201810983045.3 filed on August 27, 2018 and claims priorities thereof. The entire contents of this application are hereby incorporated by reference in their entireties.

### TECHNICAL FIELD

Embodiments of the present disclosure relate to the technical field of wireless communication technologies, and in particular to a user interface (UI) display method, an apparatus, a terminal device, and a storage media.

### BACKGROUND

There are two types of Radio Access Networks (RAN) under a Non-Stand Alone architecture. How the terminal determines the type of the RAN of the current service and correctly displays the RAN type of the current service through its own UI remains a problem to be solved.

### SUMMARY OF THE DISCLOSURE

Embodiments of the present disclosure may provide a user interface display method, an apparatus, a terminal device and a storage media. Under an NSA architecture, the terminal device could determine the type of the RAN of the current service, and correctly display the RAN type of the current service on the UI of the terminal device.

According to a first aspect, a user interface display method may be provided. The method may include: the type of the RAN used for a downlink transmission may be determined by a terminal device according to an available downlink spectrum resource allocated by a first network.

The type of the radio access network may be displayed by the terminal device on the UI.

According to a second aspect, a user interface display apparatus may be provided, which may be configured to perform the method in the above-mentioned first aspect or various implementation manners thereof.

Specifically, the user interface display apparatus may include a functional module for performing the method in the above-mentioned first aspect or various implementation manners thereof.

According to a third aspect, a terminal device may be provided, which may include a processor and a memory. The memory may be configured to store a computer program. The processor may be configured to call and execute the computer program stored in the memory, to perform the method in the above-mentioned first aspect or various implementation manners thereof.

According to a fourth aspect, a chip may be provided for implementing the method in the above-mentioned first aspect or various implementation manners thereof.

Specifically, the chip may include a processor. The processor may be configured to call a computer program from the memory and execute the same, to enable a device mounted with the chip to perform the method in the above-mentioned first aspect or various implementation manners thereof.

According to a fifth aspect, a computer-readable storage medium configured to store a computer program may be provided. The computer program enables a computer to execute the method in the above-mentioned first aspect or various implementation manners thereof.

According to a sixth aspect, a computer program product including a computer program instruction may be provided. The computer program instruction may enable a computer to execute the method in the above-mentioned first aspect or various implementation manners thereof.

According to a seventh aspect, a computer program may be provided. When the computer program is running on a computer, the computer may be enabled to perform the above-mentioned method of the first aspect or various implementation manners thereof.

Through the above-mentioned technical solutions, the terminal device may determine the type of the RAN used for the downlink transmission according to the available downlink spectrum resource allocated by the first network. The terminal device may display the determined RAN type on its own UI.

### BRIEF DESCRIPTION OF THE DRAWINGS

Fig. 1 is a schematic diagram of a communication system architecture provided by an embodiment of the present invention.
Fig. 2 is a schematic diagram of an interaction between a terminal device and a network device of an NSA.
Fig. 3 is a schematic diagram of a user interface display method provided by an embodiment of the present invention.
Fig. 4 is a processing flow chart, in which the terminal device provided by an embodiment of the present disclosure determines a type of the RAN.
Fig. 5 is a processing flow chart, in which the terminal device provided by an embodiment of the present disclosure determines the type of the RAN for a downlink transmission according to a channel quality and a signal strength of a 5G mobile communication network.
Fig. 6a is a first schematic diagram of a UI provided by an embodiment of the present disclosure.
Fig. 6b is a second schematic diagram of the UI provided by an embodiment of the present disclosure.
Fig. 7 is a schematic diagram of a composition structure of a user interface display apparatus provided by an embodiment of the present disclosure.
Fig. 8 is a schematic structural diagram of a terminal device provided by an embodiment of the present disclosure.
Fig. 9 is a schematic diagram of a chip provided by an embodiment of the present disclosure.
Fig. 10 is a schematic block diagram of a communication system provided by an embodiment of the present disclosure.

### DETAILED DESCRIPTION

Technical solutions in embodiments of the present disclosure will be described in connection with accompanying drawings of the embodiments of the present disclosure. Obviously, the described embodiments are only a part of the embodiments but not all of them. All other embodiments obtained by a person of ordinary skills in the art based on embodiments of the present disclosure without creative efforts should all be within the protection scope of the present disclosure.

The technical solutions of the embodiments of the present disclosure may be applied to various communication systems, such as: a global system of mobile communication (GSM), a code division multiple access (CDMA) system, a wideband code division multiple access (WCDMA) system, a general packet radio service (GPRS), a long term evolution (LTE) system, an LTE frequency division duplex(FDD) system, an LTE time division duplex (TDD), a universal mobile telecommunication system (UMTS), a worldwide interoperability for microwave access (WiMAX) communication system or 5G system, an LTE-based access to unlicensed spectrum (LTE-U) system, an NR-based access to unlicensed spectrum (NR-U) system, a universal mobile telecommunication system (UMTS), a worldwide interoperability for microwave access (WiMAX) communication systems, a wireless local area networks (WLAN), a wireless fidelity (Wi-Fi), a next-generation communication systems or other communication systems, etc.

Generally, traditional communication systems may support a limited number of connections and may be easy to implement. However, with development of the communication technology, mobile telecommunication systems will not only support traditional communications, but will also support, for example, a device to device (D2D) communication, a machine to machine (M2M) communication, a machine type communication(MTC) and vehicle to vehicle (V2V) communication, etc., to which embodiments of the present disclosure may also be applied.

System architectures and service scenarios described in embodiments of the present disclosure are merely for clarified illustration of the technical solutions of the embodiments of the present disclosure, and do not impose a limitation on the technical solutions provided in embodiments of the present disclosure. Those of ordinary skills in the art will appreciate that, with the evolution of network architectures and the emergence of new service scenarios, the technical solutions provided in embodiments of the present disclosure may be equally applicable to similar technical problems.

The network device involved in embodiments of the present disclosure may be a common base station (such as an NodeB or an eNB or a gNB), a new radio controller (NR controller), a centralized unit, a new radio base station, a remote radio module, a micro base station, a relay, a distributed unit, a transmission reception point (TRP), a transmission point (TP) or any other devices. The specific technology and the specific device configuration adopted by the network device may not be limited in the present disclosure. For ease of description, in all embodiments of the present disclosure, the above-mentioned apparatuses providing wireless communication function for the terminal device may collectively referred to as the network device.

In embodiments of the present disclosure, terminal devices may be terminals of any kind. For example, the terminal device may be a user equipment of machine type communication. In other words, the terminal device may also be referred to as a user equipment(UE), a mobile station(MS), a mobile terminal, a terminal etc. The terminal device may communicate with one or more core networks via a radio access network (RAN). For example, the terminal device may be a mobile phone (also known as a 'cellular' phone), a computer with a mobile terminal etc. For example, the terminal device may also be a portable, a pocket-sized, a handheld, a computer built-in or a vehicle on board mobile apparatus, which may exchange language and/or data with the wireless access network. The terminal device may not be specifically limited in embodiments of the present disclosure.

In some embodiments, the network device and the terminal device may be deployed on land, whether indoor or outdoor, handheld or vehicle on board. The network device and the terminal device may also be deployed on water surface, and may also be deployed on airborne aircraft, balloons and satellites. The application scenarios of the network device and the terminal device may not be limited in embodiments of the present disclosure.

In some embodiments, a communication between the network device and the terminal device and a communication between the terminal devices may be carried out through a licensed spectrum, or through an unlicensed spectrum or through both of them. The communication between the network device and the terminal device may be conducted in the spectrum below 7 gigahertz(GHz), in the spectrum above 7 GHz, or in both of them. The specific spectrum resource adopted by the communication between the network device and the terminal device may not be limited in embodiments of the present disclosure.

Generally, traditional communication systems may support a limited number of connections and may be easy to be implemented. However, with development of the communication technology, mobile telecommunication systems will not only support traditional communications, but will also support, for example, a device to device (D2D) communication, a machine to machine (M2M) communication, a machine type communication(MTC) and a vehicle to vehicle (V2V) communication, etc., to which embodiments of the present disclosure may also be applied.

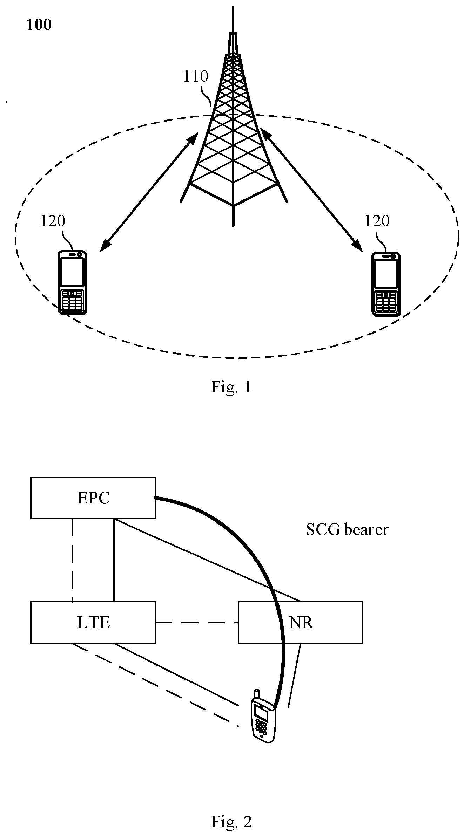

An exemplary communication system 100 applied in embodiments of the present disclosure is shown in Fig. 1. The communication system 100 may include a network device 110. The network device 110 may be a device communicating with a terminal device 120 (or referred to as a communication terminal or a terminal). The network device 110 may provide a communication coverage for a specific geographic area, and may communicate with terminal devices located in the coverage area. In some embodiments, the network device 110 may be a base transceiver station (BTS) of a GSM system or a CDMA system, or a base station (NodeB, NB) of a WCDMA system, or an evolutional base station (Evolutional Node B, eNB or eNodeB) of an LTE system, or a wireless controller of a cloud radio access network (CRAN). Or the network device may be a mobile switching center, a relay station, an access point, a vehicle on board device, a wearable device, a hub, a switch, a bridge, a router, a network side device of a 5G network, or a network device of a future evolutional public land mobile network (PLMN), etc.

The communication system 100 may also include at least one terminal device 120 located in the coverage area of the network device 110. As used herein, 'terminal device' may include, but be not limited to: a connection via a wired line, such as via a public switched telephone networks (PSTN), a digital subscriber line (DSL), a digital cable, and a direct cable connection ; and/or another data connection/network; and/or via a wireless interface, for example, in a case of a cellular network, a wireless local area networks (WLAN), a digital TV network such as a DVB-H network, a satellite network, an AM- FM broadcast transmitter; and/or an apparatus of another terminal device that is configured to receive/transmit communication signals; and/or a internet of things (IoT) device. A terminal device configured to communicate via a wireless interface may be referred to as a 'wireless communication terminal', a 'wireless terminal' or a 'mobile terminal'. Examples of the mobile terminal may include but be not limited to: a satellite or cellular phone; a personal communications system (PCS) terminal that combines a cellular radio phone with data processing, fax and data communication capability; a PDA that may include a radio phone, a pager, an Internet/Intranet access, a web browser, a memo pad, a calendar and/or a global positioning system (GPS) receiver; and a conventional laptop and/or palmtop receiver or other electrical apparatuses including a radio telephone transceiver. The terminal device may refer to an access terminal, a user equipment (UE), a user unit, a user station, a mobile station, a mobile platform, a remote station, a remote terminal, a mobile device, a user terminal, a terminal, a wireless communication device, a user agent or a user apparatus. The access terminal may be a cellular phone, a cordless phone, a session initiation protocol (SIP) phone, a wireless local loop (WLL) station, a personal digital assistant (PDA), and a handheld device with wireless communication function, a computing device or other processing devices connecting to wireless modems, a vehicle on board device, a wearable device, a terminal device in a 5G network, or a terminal device in the future evolutional PLMN, etc.

In some embodiments, a Device to Device (D2D) communication may be performed between terminal devices 120.

In some embodiments, the 5G system or the 5G network may also be referred to as a new radio (NR) system or a NR network.

Fig. 1 illustrates a network device and two terminal devices as an example. In some embodiments, the communication system 100 may include multiple network devices and the coverage area of each network device may include different numbers of terminal devices, which is not limited in embodiments of the present disclosure.

In some embodiments, the communication system 100 may also include other network entities, such as a network controller, a mobile management entity, which are not limited in embodiments of the present disclosure.

It should be appreciated that, devices with communication functions in the network/system in embodiments of the present disclosure may be referred to as communication devices. Taking the communication system 100 illustrated in Fig. 1 as an example. The communication device may include a network device 110 and a terminal device 120 with communication functions. The network device 110 and the terminal device 120 may be specific devices described above, which will not be repeated here again. The communication device may also include other devices in the communication system 100, for example, other network entities such as a network controller or a mobile management entity, which is not limited in embodiments of the present disclosure.

It should be appreciated that, the terms 'system' and 'network' may often be used interchangeably herein. The term 'and/or' herein is only indicating an association relationship that describes associated objects. That is, there could be three relationships. For example, A and/or B may mean the following three cases: A alone exists; A and B exist at the same time; B alone exists. In addition, the character '/' herein generally indicates that the associated objects there before and thereafter are in an 'OR' relationship.

Before the embodiments of the present disclosure are detailed, NSA are briefly illustrated.

With continuous development of the mobile communication network, the mobile communication network has gradually evolved from the fourth generation (4G) mobile communication network to the fifth generation (5G) mobile communication network. During the evolution of the mobile communication network, each of the RAN, the core network (CN) and the terminal has a relatively independent evolutional schedule. When the CN of the 5G mobile communication network and the terminal of the 5G mobile communication network are both immature, the CN of the 4G mobile communication network may be required for data transmission. The terminal may access the CN of the 4G mobile communication network through the RAN of the 4G mobile communication network and the RAN of the 5G mobile communication network. This type of network architecture may belong to the NSA architecture.

For an option3a type NSA, when the terminal device interacts with the network device, as is shown in Fig. 2, the control plane signaling may be transmitted through the LTE network device. The user plane data of the terminal device may be distributed on the terminal device side, and then be independently transmitted through the LTE air interface/base station and the NR air interface/base station respectively to the evolved packet core (EPC), thereby realizing the secondary cell group bearer (SCG bearer) between the EPC and the terminal device.

In order to realize the enhance mobile broadband (eMBB) function of the 5G mobile communication network, there may be two ways to distribute the user plane data at the terminal device, namely NR and LTE. Since the EPC is the core network of the 4G mobile communication network, the EPC's network configuration and indicators may both not fully meet the needs of the 5G mobile communication network. However, with the evolution of the LTE technology and the improvement of the EPC's capability, some of the technical indicators of the EPC will be close to or even meet the requirement of the technical indicators of the 5G mobile communication network. During this process, the UI of the terminal device may be required to truly reflect the current network status and user scenarios.

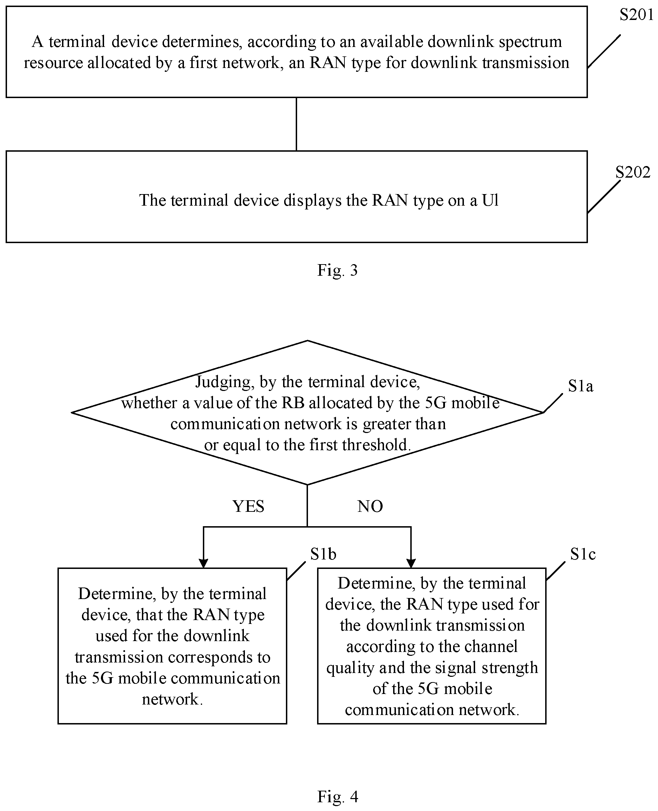

As is shown in Fig. 3, the processing flow of a user interface display method provided in this embodiment of the application may include the following operations.

In operation S201, the terminal device may determine the RAN type used for the downlink transmission according to the available downlink spectrum resource allocated by the first network.

In embodiments of the present disclosure, a transmission speed of the first network may be greater than a transmission speed of a second network.

In some embodiments, the first network may be a 5G mobile communication network, and the second network may be a 4G mobile communication network. Therefore, the terminal device may determine the RAN type used for the downlink transmission according to the available downlink spectrum resource allocated by the first network may mean that, the terminal device may determine the RAN type used for the downlink transmission according to the available downlink spectrum resource allocated by the 5G mobile communication network.

In some optional embodiments, the available downlink spectrum resource may be a physical resource block (RB).

For example, if the first network is a 5G mobile communication network, the second network is a 4G mobile communication network, and the available downlink spectrum resource is RB, then as shown in Fig. 4, the processing process during which the terminal device determines the RAN type may include the following operations.

In operation S1a, the terminal device may judge whether a value of RB allocated by the 5G mobile communication network is greater than or equal to the first threshold. When the judgment result is YES, then go to operation S1b, and when the judgment result is NO, then go to operation S1c.

Here, an optional value of the first threshold may be the maximum RB size when the second network adopts a single carrier wave. For example, when the second network is a 4G mobile network, and the maximum RB size is 100 when the 4G mobile network adopts a single carrier wave, then the first threshold may be 100. During the actual implementation, the value of the first threshold may also be flexibly set according to an actual network environment.

In operation S1b, the terminal device may determine that, the type of the RAN used for the downlink transmission may correspond to the 5G mobile communication network.

In operation S1c, the terminal device may determine the RAN type used for the downlink transmission according to the channel quality and the signal strength of the 5G mobile communication network.

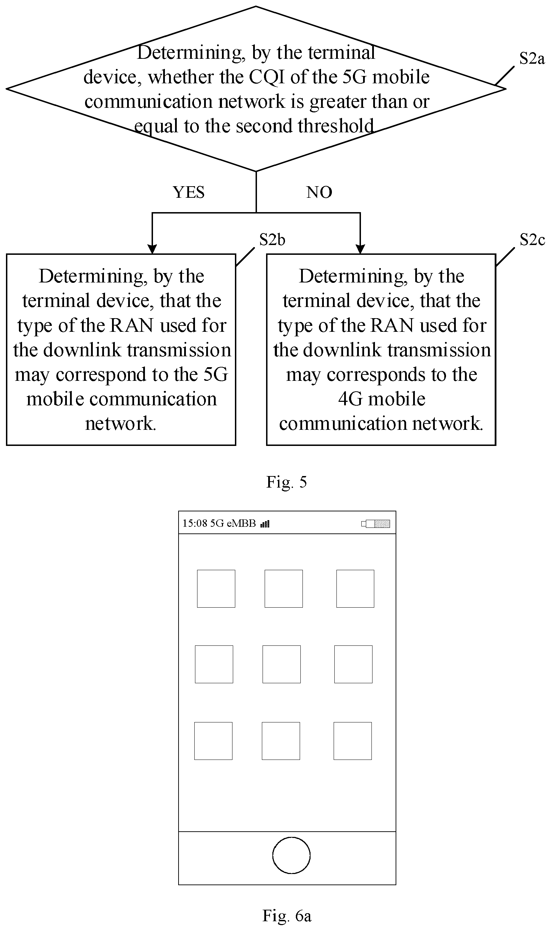

In some optional embodiments, when the channel quality and the signal strength of the 5G mobile communication network are characterized by the Channel Quality Indication (CQI), as shown in Fig. 5, the processing process during which the terminal device may determine the RAN type used for the downlink transmission according to the channel quality and the signal strength of the 5G mobile communication network may include the following operations.

In operation S2a, the terminal device may determine whether the CQI of the 5G mobile communication network is greater than or equal to the second threshold. When the judgment result is YES, then go to operation S2b, and when the judgment result is NO, then go to operation S2c. In some optional embodiments, the second threshold may be 10. Of course, the second threshold may also be flexibly set according to the actual network environment.

In operation S2b, the terminal device may determine that the RAN type used for the downlink transmission may be the RAN corresponding to the 5G mobile communication network.

In operation S2c, the terminal device may determine that, the type of the RAN used for the downlink transmission may correspond to the 4G mobile communication network.

It should be noted that, embodiments of the present disclosure may be applicable to scenarios where the downlink transmission data is sufficiently large. For example, when the terminal device performs a full-load downlink transmission and the transmission time is greater than 60s, then the transmitted data size may be expressed as 1.2Gbps^{∗}60s/8. At this point, the transmitted data size is 9GB. It could be appreciated that, embodiments of the present disclosure may be applicable to scenarios where the downlink transmitted data is greater than 9GB, and the size of the data that the terminal device could downlink transmit may be related to the downlink transmission capability of the Modem in the terminal device.

In operation S202, the terminal device may display the RAN type on the UI.

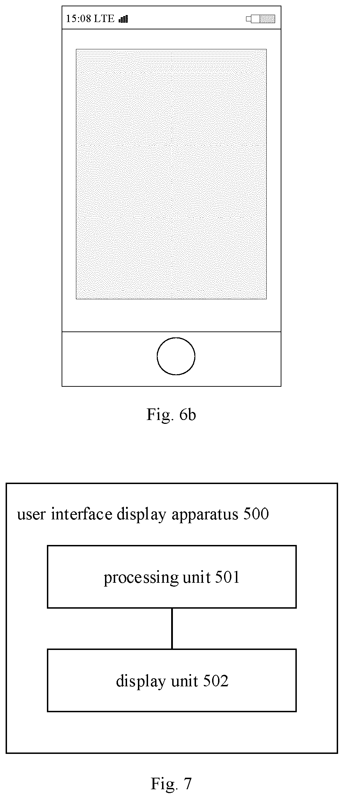

In some optional embodiments, when the terminal device determines that the access network type is the RAN corresponding to the 5G mobile communication network, as shown in Fig. 6a, the terminal device may directly display an eMBB icon of the 5G mobile communication network on its own UI. When the terminal device determines that the access network type is the RAN corresponding to the 4G mobile communication network, as shown in Fig. 6b, the terminal device may directly display an icon corresponding to the 4G mobile communication network on its own UI.

For the following application scenarios, when the terminal device has been attached to the network device of the 4G mobile communication network and the network device of the 5G mobile communication network, and the terminal device is in the service mode, if the terminal device is static, then the terminal device-the 5G network device-the EPC form a complete link, and the bandwidth of this link (air interface and core network interface) may be much greater than the bandwidth of the terminal device-the 4G network device-the EPC link. Therefore, when the wireless resource of the above two links both meet the requirements, the terminal device-the 5G network device-the EPC link may be preferred from the perspective of the terminal device. In embodiments of the present disclosure, when the available downlink spectrum resource (such as RB) allocated by the 5G mobile communication network is greater than or equal to the preset first threshold, the terminal device may determine that the RAN type used for the downlink transmission may be the RAN corresponding to the 5G mobile communication network. Further, when the RB is less than the preset first threshold, the RAN type used for the downlink transmission may be determined according to the channel command and signal strength of the 5G mobile communication network. In this way, the terminal device may determine the RAN type of the current service under the NSA architecture with two types ofRANs.

The composition structure diagram of the user interface display apparatus provided by embodiments of the present disclosure is shown in Fig. 7. The user interface display apparatus 500 may include a processing unit 501 and a display unit 502.

The processing unit 501 may be configured to determine the RAN type used for the downlink transmission according to the available downlink spectrum resource allocated by the first network.

The display unit 502 may be configured to display the access network type on the UI.

In embodiments of the present disclosure, the available downlink spectrum resource may be an RB.

In embodiments of the present disclosure, the processing unit 501 may be configured to determine that the RAN type used for the downlink transmission is the RAN corresponding to the first network when the value of RB allocated by the first network is greater than or equal to the first threshold.

In embodiments of the present disclosure, the processing unit 501 may be configured to determine the RAN type used for the downlink transmission according to the channel quality and the signal strength of the first network when the value of RB allocated by the first network is less than the first threshold.

In embodiments of the present disclosure, the first threshold value may be the maximum RB size when the second network uses a single carrier wave.

In embodiments of the present disclosure, the processing unit may be configured that, when the CQI of the first network is greater than or equal to a preset second threshold, the terminal device determines that the RAN type used for the downlink transmission is the RAN corresponding to the first network.

When the CQI of the first network is less than the second threshold, the terminal device determines that the RAN type used for the downlink transmission is the RAN corresponding to the second network.

It should be noted that, in embodiments of the present disclosure, a transmission speed of the first network may be greater than a transmission speed of the second network. In some embodiments, the first network may be a 5G mobile communication network, and the second network may be a 4G mobile communication network. An optional value of the first threshold may be the maximum RB size when the second network uses a single carrier wave. The first threshold and the second threshold may be flexibly set according to the actual network environment.

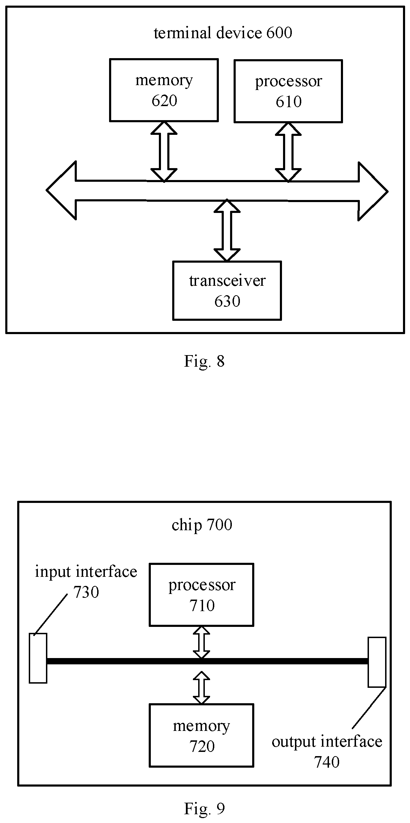

Fig. 8 is a schematic structural diagram of a terminal device 600 provided by embodiments of the present disclosure. The terminal device 600 shown in Fig. 8 may include a processor 610. The processor 610 may call a computer program from the memory and execute it to implement the methods in embodiments of the present disclosure.

In some embodiments, as shown in Fig. 8, the terminal device 600 may further include a memory 620. The processor 610 may call the computer program from the memory 620 and execute it to implement the methods in embodiments of the present disclosure.

The memory 620 may be a separate device independent from the processor 610, or may be integrated in the processor 610.

In some embodiments, as shown in Fig. 8, the terminal device 600 may also include a transceiver 630. The processor 610 may control the transceiver 630 to communicate with other devices. Specifically, the transceiver 630 may send information or data to other devices, or receive information or data sent by other devices.

The transceiver 630 may include a transmitter and a receiver. The transceiver 630 may further include antennas. The number of antennas may be one or more.

In some embodiments, the terminal device 600 may specifically be a network device in embodiments of the present disclosure. The terminal device 600 may implement the corresponding processes implemented by the network device in various methods of the embodiments of the present disclosure. For the sake of brevity, details are not repeated here.

In some embodiments, the terminal device 600 may implement the corresponding processes implemented by the mobile terminal/terminal device in all the methods of embodiments of the present disclosure. For the sake of brevity, details are not repeated here.

Fig. 9 is a schematic structural diagram of a chip of embodiments of the present disclosure. The chip 700 shown in Fig. 9 may include a processor 710. The processor 710 may call the computer program from the memory and execute it to implement the methods in embodiments of the present disclosure.

In some embodiments, as shown in Fig. 9, the chip 700 may further include a memory 720. The processor 710 may call the computer program from the memory 720 and execute it to implement the methods in embodiments of the present disclosure.

The memory 720 may be a separate device independent from the processor 710, or may be integrated in the processor 710.

In some embodiments, the chip 700 may further include an input interface 730. The processor 710 may control the input interface 730 to communicate with other devices or chips. Specifically, the processor 710 may obtain information or data sent by other devices or chips.

In some embodiments, the chip 700 may further include an output interface 740. The processor 710 may control the output interface 740 to communicate with other devices or chips. Specifically, the processor 710 may send information or data to other devices or chips.

In some embodiments, the chip may be applied to the network device in embodiments of the present disclosure, and the chip may implement the corresponding processes implemented by the network device in various methods of embodiments of the present disclosure. For the sake of brevity, details are not repeated here.

In some embodiments, the chip may be applied to the mobile terminal/terminal device in embodiments of the present disclosure. The chip may implement the corresponding processes implemented by the mobile terminal/terminal device in various methods of embodiments of the present disclosure. For the sake of brevity, details are not repeated here.

It should be appreciated that, the chips mentioned in embodiments of the present disclosure may also be referred to as system-level chips, system chips, chip systems or system-on-chips.

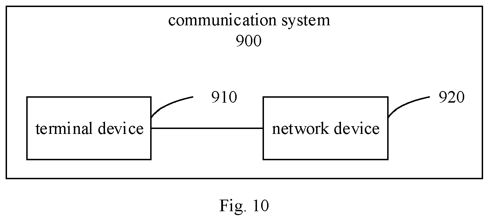

Fig. 10 is a schematic block diagram of a communication system 900 provided by an embodiment of the present disclosure. As shown in Fig. 10, the communication system 900 may include a terminal device 910 and a network device 920.

The terminal device 910 may be used to implement the corresponding functions implemented by the terminal device in the foregoing methods. For the sake of brevity, details are not repeated here.

It should be appreciated that, the processor of embodiments of the present disclosure may be an integrated circuit chip with signal processing capability. In the implementation process, operations of the foregoing method embodiments may be completed by hardware integrated logic circuits in the processor or by instructions in the form of software. The above-mentioned processor may be a general-purpose processor, a digital signal processor (DSP), an application specific integrated circuit (ASIC), a field programmable gate array (FPGA) or other Programmable Logic Devices, discrete gates or transistor logic devices, discrete hardware components. The methods, operations, and logical block diagrams disclosed in embodiments of the present disclosure may be implemented or performed. The general-purpose processor may be a microprocessor. The processor may also be any conventional processor etc. The operations of the method disclosed in embodiments of the present disclosure may be directly executed by a hardware decoding processor, or executed by a combination of hardware and software modules in a decoding processor. The software module may be located in a mature storage media in the field, such as a random access memory, a flash memory, a read-only memory, a programmable read-only memory, or an electrically erasable programmable memory and a register. The storage media may be located in the memory. The processor may read the information in the memory and complete the operations of the above-mentioned methods in combination with its hardware.

It should be appreciated that, the memory in embodiments of the present disclosure may be a volatile memory or a non-volatile memory, or may include both volatile and non-volatile memories. Among them, the non-volatile memory may be a read-only memory (ROM), a programmable read-only memory (PROM), an erasable programmable read-only memory (EPROM), and an electrically EPROM (EEPROM) or a flash memory. The volatile memory may be a random access memory (RAM), which may be used as an external high speed cache. By way of exemplary but not restrictive description, many forms of RAM may be available, such as a static RAM (SRAM), a dynamic RAM (DRAM), and a synchronous DRAM (SDRAM), a double data rate SDRAM (DDR SDRAM), an enhanced SDRAM(ESDRAM), a Synchlink DRAM (SLDRAM)) and a direct Rambus RAM (DR RAM). It should be noted that, the memories of the systems and methods described herein may be intended to include, but not limited to these and any other suitable types of memories.

It should be appreciated that, the above-mentioned memories are exemplary but not restrictive. For example, the memory in embodiments of the present disclosure may also be a static RAM (SRAM), a dynamic RAM (DRAM), a synchronous DRAM (SDRAM), a double data rate SDRAM(DDR SDRAM), an enhanced SDRAM (ESDRAM), a synch link DRAM (SLDRAM) and a direct Rambus RAM(DR RAM), etc. In other words, the memories in embodiments of the present disclosure are intended to include, but is not limited to these and any other suitable types of memories.

The embodiments of the present disclosure also provide a computer-readable storage media for storing computer programs.

In some embodiments, the computer-readable storage media may be applied to the network device in embodiments of the present disclosure. The computer program may enable the computer to execute the corresponding processes implemented by the network device in various methods of embodiments of the present disclosure. For the sake of brevity, details are not repeated here.

In some embodiments, the computer-readable storage media may be applied to the mobile terminal/terminal device in embodiments of the present disclosure. The computer program may enable the computer to execute the corresponding processes implemented by the mobile terminal/terminal device in various methods of embodiments of the present disclosure. For the sake of brevity, details are not repeated here.

The embodiments of the present disclosure may also provide a computer program product, including computer program instructions.

In some embodiments, the computer program product may be applied to the network device in embodiments of the present disclosure. The computer program instructions may enable the computer to execute the corresponding processes implemented by the network device in various methods of embodiments of the present disclosure. For the sake of brevity, details are not repeated here.

In some embodiments, the computer program product may be applied to the mobile terminal/terminal device in embodiments of the present disclosure. The computer program instructions may enable the computer to execute the corresponding processes implemented by the mobile terminal/terminal device in various methods of embodiments of the present disclosure. For the sake of brevity, details are not repeated here.

The embodiment of the present disclosure may also provide a computer program.

In some embodiments, the computer program may be applied to the network device in embodiments of the present disclosure. When the computer program runs on the computer, it may enable the computer to execute the corresponding processes implemented by the network device in various methods of embodiments of the present disclosure. For the sake of brevity, details are not repeated here.

In some embodiments, the computer program may be applied to the mobile terminal/terminal device in embodiments of the present disclosure. When the computer program runs on the computer, it may enable the computer to execute the corresponding processes implemented by the mobile terminal/terminal device in various methods of embodiments of the present disclosure. For the sake of brevity, details are not repeated here.

A person of ordinary skill in the art may realize that, the units and algorithm operations of the examples described in combination with the embodiments disclosed herein may be implemented in the form of an electronic hardware, or a combination of computer software and electronic hardware. Whether these functions are executed by hardware or software may depend on the specific application and design constraints of the technical solution. Professionals and technicians may use different methods for each specific application to implement the described functions, but such implementations should not be considered beyond the scope of the present disclosure.

Those skilled in the art may clearly understand that, for the convenience and conciseness of description, the specific working process of the above-mentioned systems, apparatuses, and units may refer to corresponding processes in the foregoing method embodiments, which will not be repeated here.

In the several embodiments provided in the present disclosure, it should be understood that the disclosed systems, apparatuses and methods may be implemented in other ways. For example, the apparatus embodiments described above are only illustrative. For example, the division of the units is only a logical function division. There may be other divisions in practice. For example, multiple units or components may be combined or integrated into another system, or some features may be omitted or not implemented. In addition, the illustrated or discussed mutual couplings, direct couplings or communication connections may be via indirect couplings or communication connections between some interfaces, apparatus or units, and may have electrical, mechanical or other forms.

The units described as separate components may or may not be physically separated, and the components displayed as units may or may not be physical units. That is, the components may be located in one place, or may be distributed on multiple network units. Some or all of the units may be selected according to actual needs to achieve objectives of technical solutions of embodiments of the present embodiment.

In addition, various functional units in various embodiments of the present disclosure may be integrated into one processing unit. Or each unit may be separated from each other physically, or two or more units may be integrated into one unit.

If the function is implemented in the form of a software function unit and sold or utilized as an independent product, it may be stored in a computer readable storage media. Based on this knowledge, the technical solution of the present disclosure essentially or the part that contributes to the existing technology or the part of the technical solution may be embodied in the form of a software product. The computer software product may be stored in a storage media, and may include several instructions that enable a computer device (which may be a personal computer, a server, or a network device, etc.) to execute all or part of the operations of the methods described in the various embodiments of the present disclosure. The forgone storage media may include: a U disk, a mobile hard disk, a read-only memory ROM, a random access memory (RAM), a magnetic disk or an optical disk and other media that could store program codes.

The above are only specific implementations of the present disclosure, but the protection scope of the present disclosure may not be limited to this. Alternatives and substitutions within the technical range revealed by the present disclosure may easily occur to any person skilled in the art and should be within the protection scope of the present disclosure. Therefore, the protection scope of the present disclosure shall be subject to the protection scope of the claims.

## Claims

1. A user interface display method, comprising:
determining, by a terminal device, a type of a radio access network (RAN) used for a downlink transmission according to an available downlink spectrum resource allocated by a first network;
displaying, by the terminal device, the type of the RAN on a user interface (UI).

2. The method as claimed in claim 1, wherein the available downlink spectrum resource comprises a physical resource block (RB).

3. The method as claimed in claim 2, wherein the determining, by the terminal device, a type of a radio access network (RAN) used for the downlink transmission, according to an available downlink spectrum resource allocated by a first network, comprises:
determining, by the terminal device, that the type of the RAN used for the downlink transmission corresponds to the first network, in response to a value of RB allocated by the first network being greater than or equal to a first threshold.

4. The method as claimed in claim 2, wherein the determining, by the terminal device, a type of a radio access network (RAN) used for the downlink transmission, according to an available downlink spectrum resource allocated by a first network, comprises:
determining, by the terminal device, the type of the RAN used for the downlink transmission according to a channel quality and a signal strength of the first network, in response to a value of RB allocated by the first network being less than the first threshold.

5. The method as claimed in claims 2 or 3, wherein the first threshold is a maximum value of the value of RB, in response to a second network being a single carrier wave.

6. The method as claimed in claim 4, wherein the determining, by the terminal device, the type of the RAN used for the downlink transmission according to a channel quality and a signal strength of the first network, in response to a value of RB allocated by the first network being less than the first threshold comprises:
determining, by the terminal device, that the type of the RAN used for the downlink transmission corresponds to the first network, in response to a channel quality indicator (CQI) of the first network being greater than or equal to a preset second threshold;
determining, by the terminal device, that the type of the RAN used for the downlink transmission corresponds to the second network, in response to the CQI of the first network being less than the second threshold.

7. A user interface display apparatus, comprising:
a processing unit, configured to determine a type of an radio access network (RAN) used for a downlink transmission according to an available downlink spectrum resource allocated by a first network;
a display unit, configured to display the RAN type on a user interface (UI).

8. The apparatus as claimed in claim 7, wherein the available downlink spectrum resource comprises a physical resource block RB.

9. The apparatus as claimed in claim 8, wherein the processing unit is configured to determine that the type of the RAN used for the downlink transmission corresponds to the first network, in response to a value of RB allocated by the first network being greater than or equal to a first threshold.

10. The apparatus as claimed in claim 8, wherein the processing unit is configured to determine the type of the RAN used for the downlink transmission according to a channel quality and a signal strength of the first network, in response to a value of RB allocated by the first network being less than the first threshold.

11. The apparatus as claimed in claims 8 or 9, wherein the first threshold is a maximum value of the value of RB in response to a second network being a single carrier wave.

12. The apparatus as claimed in claim 10, wherein the processing unit is configured that,
the terminal device determines that the type of the RAN used for the downlink transmission corresponds to the first network, in response to a channel quality indicator (CQI) of the first network being greater than or equal to a preset second threshold,
the terminal device determines that the type of the RAN used for the downlink transmission corresponds to the second network, in response to the CQI of the first network being less than the second threshold.

13. A terminal device, comprising: a processor and a memory, the memory is configured to store a computer program, the processor is configured to call the computer program stored in the memory and run the same, to perform the method as claimed in any one of claims 1 to 6.

14. A chip, comprising: a processor, configured to call a computer program from a memory and run the same, thereby enabling a device mounted with the chip to perform the method as claimed in any one of claims 1 to 6.

15. A computer-readable storage media configured to store a computer program, the computer program is configured to enable a computer to perform the method as claimed in any one of claims 1 to 6.

16. A computer program product comprising a computer program instruction, the computer program instruction is configured to enable a computer to perform the method as claimed in any one of claims 1 to 6.

17. A computer program that enables a computer to perform the method as claimed in any one of claims 1 to 6.
